**Europäisches Patentamt**

**European Patent Office**

**Office européen des brevets**

(19)

(11) Veröffentlichungsnummer: **0 233 548 B1**

(12) **EUROPÄISCHE PATENTSCHRIFT**

(45) Veröffentlichungstag der Patentschrift: **15.07.92**

(51) Int. Cl.⁵: **B29C 45/76**

(21) Anmeldenummer: **87101505.3**

(22) Anmeldetag: **04.02.87**

(54) Verfahren und Einrichtung zur Regelung des Spritzgiessprozesses.

(30) Priorität: **14.02.86 DD 287035**
**11.06.86 DD 291181**

(43) Veröffentlichungstag der Anmeldung:
**26.08.87 Patentblatt 87/35**

(45) Bekanntmachung des Hinweises auf die
Patenterteilung:
**15.07.92 Patentblatt 92/29**

(84) Benannte Vertragsstaaten:
**AT CH DE ES FR GB IT LI NL**

(56) Entgegenhaltungen:
**DE-A- 2 209 602**
**DE-A- 2 429 874**
**US-A- 3 792 134**
**US-A- 3 859 400**

**PATENT ABSTRACTS OF JAPAN, Band 9, Nr.
87 (M-372)[1810], 17. April 1985; & JP-A-59
214 629 (NITSUSEI JIYUSHI KOGYO K.K.)
04-12-1984**

(73) Patentinhaber: **Mannesmann Demag Kunststofftechnik Wiehe GmbH
Donndorfer Strasse 3
O-4736 Wiehe(DE)**

(72) Erfinder: **Hummel, Erhard, Dipl.-Ing.
Wenzel-Verner-Strasse 25
O-9044 Karl-Marx-Stadt(DE)**
Erfinder: **Schneider, Hans, Dipl.-Ing.
Gärtnerweg 15
O-9122 Adorf/Erzgebirge(DE)**
Erfinder: **Panhans, Franz, Dipl.-Ing.
Johannes-Reitz-Strasse 18
O-9044 Karl-Marx-Stadt(DE)**
Erfinder: **Wystemp, Gerd, Dipl.-Ing.
Hans-Sachs-Strasse 17
O-9023 Karl-Marx-Stadt(DE)**

(74) Vertreter: **Meissner, Peter E., Dipl.-Ing. et al
Patentanwaltsbüro Meissner & Meissner,
Herbertstrasse 22
W-1000 Berlin 33(DE)**

## Beschreibung

Die Erfindung betrifft ein Verfahren und eine Einrichtung zur Regelung und Steuerung des Spritzgießprozesses und/oder dessen Überwachung beim Spritzgießen von Formteilen auf hydraulischen Spritzgießmaschinen, bei denen zur Umschaltung vom Spritzen auf Nachdrücken der Förderstrom reduziert wird und bei denen eine Druckerfassungseinheit für den Spritzdruck vorhanden ist.

DD-WP-66 020 betrifft ein Verfahren und eine Vorrichtung Zur Verarbeitung von formbaren Werkstoffen auf Spritzgießmaschinen. Dabei wird davon ausgegangen, daß bei vollständig gefüllten Formhohlraum die des Übergangsverhalten der Regeleinrichtung entsprechende Zeit vom programmierten Förderstrom bis zum festgelegten Kontrollförderstrom erreicht wird. Ist der Formhohlraum noch nicht vollständig gefüllt, verlängert sich diese Zeit. Der Einspritzvorgang wird so geregelt, daß eine vorgegebene Übergangszeit von Förderstrom des Einspritzens bis zum Erreichen des Kontrollförderstromes geregelt wird. Diese Lösung ist auf Maschinen mit einer den Druck steuernden Förderstromsteuerung beschränkt. Für diese Maschinen ist eine adaptive Regelung mit einer automatischen Prozeßparametervorgabe und -kontrolle möglich. Der Aufwand für eine den Druck steuernde Förderstromsteuerung ist erheblich.

In DD-WP 66 020 wird ein Verfahren angegeben, nach dem der Druckverlauf während des Einspritzvorganges über der Zeit erfaßt und differenziert und die sich bei vollständiger Werkzeugfüllung ergebende Unstetigkeitsstelle zur Umschaltung auf den Nachdruck genutzt wird.

Nach DD-WP 132 943 ist eine Schalteinrichtung zur Auslösung druckabhängiger Schaltvorgänge beim Spritzgießen bekannt, bei denen der in einem Sollwertspeicher befindliche vorgegebene Sollwertdruck mit dem anstehenden Istwertdruck mittels eine Komparators verglichen wird. Dabei ist eine entsprechende elektrische Schaltanordnung geschützt. Aufgabe dieser Erfindung ist es, mittels einer Schalteinrichtung beim Spritzgießen in der Kompressionsphase druckabhängig eine Kompressionszeitmessung zu starten und druckabhängig in die Nachdruckphase umzuschalten.

Mit der Problematik der Umschaltung von Spritzen auf Nachdruck befassen sich weitere technische Lösungen. So wird in DE-AS 1 458 150 eine elektrische betriebene Zeitmeßeinrichtung beschrieben, die zur Messung der Schußzeit mit dem Spritzkolben der Spritzgießmaschine synchron betätigt wird. Das auf den Kolben wirkende Druckmedium schaltet mittels eines Druckindikators eine Zeitmeßeinrichtung in Abhängigkeit vom Auftreten einer Druckspitze, die bei endgültiger Werkzeugfüllung auftrifft.

In DE-OS 2 412 341 wird beschrieben, wie aus der Messung des Spritzdruckes, des Werkzeuginnendruckes und eines Zeitbezugssignals ein Prozeßindex gewonnen wird. Die Zeitverzögerung zwischen Spritzdruck und Werkzeuginnendruck dient als Zeitbezugssignal. Die DE-AS 2 021 739 beschreibt eine Einrichtung bei der die Zeit zwischen Spritzbeginn und Erreichen eines bestimmten Werkzeuginnendruckes zur Bildung eines Druckeinspritzzeitindexes dient. In einem vorliegenden Fall wird die Zeit über dem gesamten Einspritzvorgang gemessen und nur ein Umschaltdruck verwendet.

Ein weiteres Verfahren zur Korrektur des Umschaltpunktes wird, in DE-A 2 443 938 beschrieben. Als Kriterium für den Füllungsgrad des Werkzeuges dient der in der Nachdruckphase gemessene Formspalt, Nach DD-WP 146 912 wird eine Einrichtung zur Steuerung einer Spritzgießmaschine mit einem als Impulsgeber gestalteten Spritzdruck-Sicherheitsventil zum Umschalten von Spritz- auf Nachdruck vorgesehen. Weiterhin ist nach DE-B 1 949 637 vorgesehen, die Umschaltung von Spritz- auf Nachdruck in Abhängigkeit von der Vorlaufgeschwindigkeit des Schneckenkolbens vorzunehmen.

Nachteilig bei den bekannten technischen Lösungen ist, daß eine Umschaltung von Spritz- auf Nachdruck mittels des Druckes eine Druckeinstellung erfordert, die höher ist als der zum Füllen der Form und zur Kompression erforderliche Druck. Der über dem erforderlichen Druck zum Füllen der Form und zur Kompression liegende Druck führt zu einer Vergrößerung der inneren Spannungen im Formteil und damit zur Qualitätsminderung.

Dadurch, daß der eingestellte Druck möglichst niedrig gehalten werden soll, wird bei Veränderungen der variablen Verarbeitungsparameter bzw. bei Veränderung der Formmasseeigenschaften, die einen höheren Druckbedarf bedingen, das Werkzeug bis zur Korrektur der Parameter nicht vollständig gefüllt bzw. der Fließfrontverlauf unterbrochen und das Formteil inhomogen und bei Veränderungen, die einen niedrigen Druckbedarf bedingen, das Werkzeug überladen.

Alle Verfahren, die einen Einspritzindex zum Auffinden des günstigsten Umschaltdruckes von Spritzen auf Nachdruck beinhalten, benötigen für ihre Funktion spezielle Werkstoffkennwerte, die werkstoff- und formteilspezifisch einzugeben sind.

Alle Verfahren der Einspritzzeitmessung und der Prozeßregelung mittels der Einspritzzeit oder auch von Teilstücken daraus, erfassen nur einen Teilzustand des Einspritzvorganges und garantieren nicht die gleichmäßige sichere Werkzeugfüllung.

Bei den vorhandenen Verfahren und Einrichtungen wird ein unnötiger Energiebedarf aufgewendet, da der eingestellte Spritzdruck im allgemeinen über dem zur Füllung der Form und zur Kompression erforderlichen Druck liegt.

Der optimale Spritzdruck bei vorgegebener Spritzgeschwindigkeit muß durch Anzeigegeräte ermittelt und über eine Eingabeeinrichtung vorgegeben werden. Für die Meßgrößenerfassung und -auswertung sind zusätzliche Aufwendungen erforderlich. Eine Regelung der variablen Verfahrensparameter und eine selbständige Einstellung eines günstigen Spritzdruckes ist nur mit aufwendigen komplizieren Meß- und Regeleinrichtungen teilweise möglich.

Ein Anfahrvorgang mit sich automatisch einstellendem günstigem Spritzdruck ist mit den bekannten Verfahren nur mit hohem Aufwand, mit nicht befriedigender Qualität möglich. Bei günstigem Spritzdruck ergibt sich die kürzeste Einspritzzeit, die bisher nur zufällig oder nur mit hohem Aufwand erreichbar ist.

Das Ziel der Erfindung besteht darin, ein Verfahren und eine Einrichtung zur Regelung und Steuerung des Spritzgießprozesses zu schaffen, daß für alle Spritzgießmaschinen, bei denen der Förderstrom bei der Umschaltung vom Spritzen auf Nachdrücken verringert wird, anwendbar ist und das eine weitgehend automatische Prozeßregelung gestattet und damit eine Verkürzung des Anfahrvorganges, eine Qualitätssteigerung der Formteile, eine Energieeinsparung und geringe Zykluszeiten ermöglicht, wobei nur ein geringer oder kein zusätzlicher technischer Aufwand erforderlich ist.

Der Erfindung liegt die Aufgabe zugrunde, ein Verfahren und eine Einrichtung zur Regelung und Steuerung des Einspritzprozesses und/oder dessen Überwachung beim Spritzgießen von Formteilen auf hydraulischen Spritzgießmaschinen, bei denen zur Umschaltung vom Spritzen auf Nachdrücken der Förderstrom reduziert wird und bei denen eine Druckerfassungseinheit für den Spritzdruck vorhanden ist, mit dem der dem optimalen Umschaltpunkt entsprechende Spritzhub, oder die Spritzzeit oder der Spritzdruck oder die Spritzgeschwindigkeit gefunden und durch Steuerung und Regelung der Prozeßparameter innerhalb vorgegebener Toleranzen geregelt wird, und dabei eine werkzeugunabhängige maschineninterne, druckspitzenfreie und eine vollständige Füllung des Formhohlraumes garantierende Prozeßsteuerung, -regelung und -überwachung möglich ist, zu schaffen.

Das Merkmal der Erfindung, durch das die vorstehend genannte Aufgabe gelöst wird, besteht darin, daß die Zeit zwischen dem Umschaltpunkt der Förderstromreduzierung und dem Erreichen eines vorgewählten Druckes oder das Druckes bei der Förderstromreduzierung oder eines damit im Zusammenhang stehenden Signales oder die Zeit zwischen einem ersten Erreichen eines vorgewählten Druckes vor der Förderstromreduzierung und einem zweiten Erreichen des gleichen oder eines anderen vorgewählten Druckes nach der Förderstromreduzierung oder daß der Spritzkolbenhub zum Zeitpunkt der Förderstromreduzierung erfaßt wird und die Änderung des Spritzkolbenhubes bis zum Erreichen eines vorgewählten Druckes oder des Druckes vor Beginn der Förderstromreduzierung oder daß der Betrag der Druckdifferenz zwischen dem maximalen Druck vor der Förderstromreduzierung erfaßt wird und als Vergleichsgröße für die Steuerung, Regelung oder Überwachung verwendet wird.

Entsprechend einem weiteren Merkmal der Erfindung wird mit der Förderstromreduzierung oder mit dem diese Förderstromreduzierung charakterisierenden Schaltsignal eine vorgegebene Zeit gestartet, und bei fehlender Druckabsenkung nach der Förderstromreduzierung im nächstens Maschinenzyklus Prozeßparameter vorzugsweise Spritzdruck und/oder Spritzhub, Einspritzzeit und/oder Massetemperatur und/oder Werkzeugtemperatur, um einen vorgegebenen Betrag gesenkt und/oder Prozeßparameter, vorzugsweise Spritzgeschwindigkeit um einen vorgegebenen Betrag erhöht, und wenn bei Druckabsenkung nach Förderstromreduzierung ein Erreichen des vorgewählten Druckes innerhalb der vorgegebenen Zeit nicht vorhanden ist, werden im nächsten Maschinenzyklus Prozeßparameter, vorzugsweise Spritzgeschwindigkeit um einen vorgegebenen Betrag verringert und/oder Prozeßparameter, vorzugsweise Spritzdruck und/oder Spritzhub und/oder Massetemperatur und/oder Werkzeugtemperatur um einen vorgegebenen Betrag erhöht.

Auch darin ist ein Merkmal der Erfindung zu sehen, daß abhängig vom Auftreten oder Nichtauftreten eines Druckeinbruches nach der Förderstromreduzierung je Zyklus eine Veränderung eines Prozeßparameters vorgenommen wird.

Dabei wird bei Auftreten des Druckeinbruches vorzugsweise der Spritzdruck, der Spritzhub, die Einspritzzeit, die Massetemperatur und/oder die Werkzeugtemperatur erhöht und/oder die Spritzgeschwindigkeit verringert. Bei Nichtauftreten des Druckeinbruches wird vorzugsweise der Spritzdruck, der Spritzhub, die Einspritzzeit, die Massetemperatur und/oder die Werkzeugtemperatur verringert und/oder die Spritzgeschwindigkeit erhöht.

Nach einem anderen Merkmal der Erfindung werden bei Unterschreitung einer vorgegebenen Änderung des Spritzkolbenhubes oder Zurückfedern des Spritzkolbens nach der Förderstromreduzierung bis zum Erreichen des vorgewählten Druckes für den nächsten Spritzzyklus Prozeßparameter, vorzugsweise der Spritzhub oder die Einspritzzeit bis zur Umschaltung von Spritzen auf Nachdrücken oder der Umschaltdruck verringert und/oder Prozeßparameter, vorzugsweise der Nachdruck erhöht und bei Überschreitung einer gleichen oder einer anderen vorgegebenen Änderung des Spritzkolbenhubes nach der Förderstromreduzierung bis zum Erreichen des vorgewählten Druckes Prozeßparameter, vorzugsweise der Spritzhub oder die Einspritzzeit oder der Umschaltdruck von Spritzen auf Nachdrücken vergrößert und/oder Prozeßparameter, vorzugsweise der Nachdruck, verringert.

Erfindungsgemäßes Merkmal der Erfindung ist gleichfalls, daß für die Veränderung der Prozeßparameter Grenzwerte vorgegeben werden und bei Erreichen der Grenzwerte eine Störung signalisiert wird und/oder entsprechend einer festgelegten Reihenfolge ein anderer Prozeßparameter verändert wird.

Ein Merkmal der Erfindung besteht noch darin, daß zur Durchführung des Verfahrens eine Einrichtung vorgesehen wird, bei der einer den Druck zum Zeitpunkt der Förderstromreduzierung meldenden Druckerfassungseinheit und/oder einem die Förderstromreduzierung meldenden Signalgeber eine Verarbeitungseinheit, die mindestens einen Speicher für ein erstes Signal besitzt und vorzugsweise einen Druckdifferenzbildner oder eine Zeitmeß- oder -vorgabeeinheit besitzt, nachgeschaltet ist und bei der wiederum eine Signalausgabeeinheit nachgeschaltet ist.

Auch darin ist ein Merkmal der Erfindung zu sehen, daß die einen Druckwert signalisierende Druckerfassungseinheit mit einem einer Verarbeitungseinheit zugehörigem Schaltglied in Wirkverbindung steht und daß eine die Stellung des Spritzkolbens zum Zeitpunkt der Förderstromreduzierung erfassende digitale oder analoge Meßeinrichtung vorhanden ist und daß dieser die Verarbeitungseinheit, die mindestens einen Speicher für ein erstes Meßsignal besitzt, nachgeschaltet ist und daß dieser wiederum eine Signalausgabeeinheit nachgeschaltet ist.

Zu den Erfindungsmerkmalen zählt außerdem, daß die Signalausgabeeinheit eine Anzeigevorrichtung mit mindestens folgenden zwei Anzeigezuständen besitzt:

1. Parameter, vorzugsweise Spritzhub, Einspritzzeit und/oder Umschaltdruck von Spritzen auf Nachdrücken verringern und/oder Nachdruck erhöhen und

2. Parameter, vorzugsweise Spritzhub, Einspritzzeit und/oder Umschaltdruck von Spritzen auf Nachdrücken vergrößern und/oder Nachdruck verringern.

Gemäß einem Merkmal der Erfindung ist der Signalausgabeeinheit ein das die Änderungsrichtung des/der Prozeßparameter kennzeichnende Signal in das zu ändernde Prozeßparametersignal umsetzender Wandler nachgeschaltet und ein diesem nachgeschalteter Regler vorhanden, der mit einem Sollwertvorgabeteil der Regler für Prozeßparameter in Wirkverbindung steht.

Schließlich besteht ein Merkmal der Erfindung noch darin, daß eine Maschinensteuerung ein Grenzwertvorgabeteil für die Prozeßparameter besitzt und daß dieses mit dem Regler in Wirkverbindung steht und daß diesem ein Prozeßparameterauswahlteil nachgeschaltet ist, das mit dem Wandler in Wirkverbindung steht.

Mit der Erfindung wird ein Verfahren und eine dazugehörige Einrichtung vorgeschlagen, die eine weitgehende automatische Prozeßregelung möglich machen, wobei für die Umschaltung vom Spritzen auf Nachdrücken bei der der Förderstrom reduziert wird, für die Prozeßparameter Spritzhub bei einer spritzwegabhängigen Umschaltung oder Einspritzzeit oder Einspritzgeschwindigkeit bei einer zeitabhängigen Umschaltung oder Spritzdruck, Spritzgeschwindigkeit, Massetemperatur oder Werkzeugtemperatur bei einer spritzdruckabhängigen Umschaltung die günstigsten Einstellwerte von der Maschine automatisch ermittelbar sind.

Nachfolgend können die vorgenannten Prozeßparameter automatisch geregelt bzw. überwacht werden. Dabei wird in sehr kurzer Zeit von subjektiven Einflüssen unabhängig eine druckspitzenfreie und vollständige Füllung des Formhohlraumes erreicht und nachfolgend durch Anpassung an Schwankungen beispielsweise der Werkzeugtemperatur oder der Öltemperatur oder der Materialkennwerte geregelt. Durch die erfindungsgemäße Lösung ist es möglich, auch bei größeren, langsam verlaufenden, den Spritzgußprozeß beeinflussenden Änderungen von Prozeßparameters wie der Viskosität, der Öltemperatur, der Werkzeugtemperatur eigenspannungsarme, vollständig gefüllte, gratfreie Formteile herzustellen.

Die Regeleinrichtung verwendet im wesentlichen in der Maschine für andere Aufgaben vorgesehene Einrichtungen; ein Eingriff in das Werkzeug ist nicht erforderlich. Durch die Erfindung werden die Zykluszeiten optimal gestaltet, eine energiegünstige Arbeitsweise beim Einspritzen gewährleistet, die Anfahrzeit verkürzt und die Qualität der Formteile verbessert. Für Massen mit geringer Viskosität können wegen der Vermeidung von Druckspitzen und damit der exakten Steuerung der Werkzeugauftreibekraft Formteile mit einer wesentlich größeren projizierten Fläche als bisher gespritzt werden.

Die Erfindung soll nachstehende an einem Ausführungsbeispiel erläutert werden:

In den zugehörigen Zeichnungen stellen dar:

Fig. 1: Diagramm des Spritzdruck- und Förderstromverlaufes sowie das zugehörige Schaltsignal der Druckerfassungseinheit während des Einspritzvorganges

Fig. 2: Diagramm des Spritzhub- und Förderstromverlaufes sowie das zugehörige Schaltsignal der Druckerfassungseinheit während des Einspritzvorganges

Fig. 3: Schaltanordnung für eine Spritzgießmaschine in schematischer Darstellung

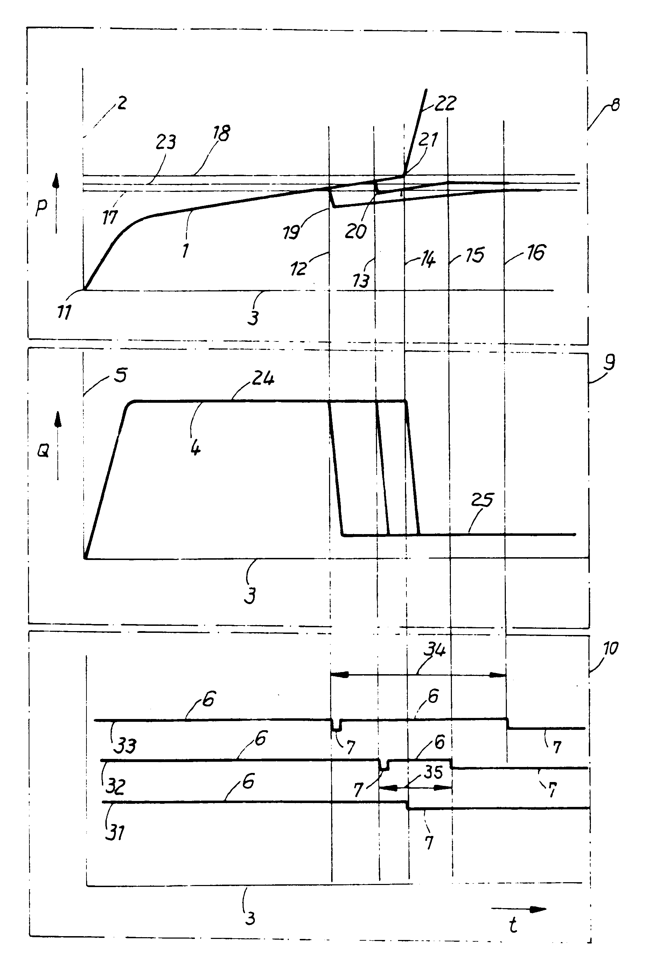

In Fig. 1 sind zur Erläuterung des Verfahrens der Druck, der Förderstrom und das Signal einer Druckerfassungseinheit in Abhängigkeit von der Zeit für drei verschiedene Umschaltpunkte für die Förderstromreduzierung dargestellt. Dabei ist im Diagramm 8 der Druckverlauf 1 mit der Druckachse 2 und der Zeitachse 3 beim Spritzen eines Formteiles dargestellt. Im Diagramm 9 ist dazu der Förderstromverlauf 4 mit der Förderstromachse 5 dargestellt. Das Diagramm 10 zeigt das Signal einer Druckerfassungseinheit mit der Stellung: "Druck unter Einstellwert" 6 und "Druck auf Einstellwert oder darüber" 7.

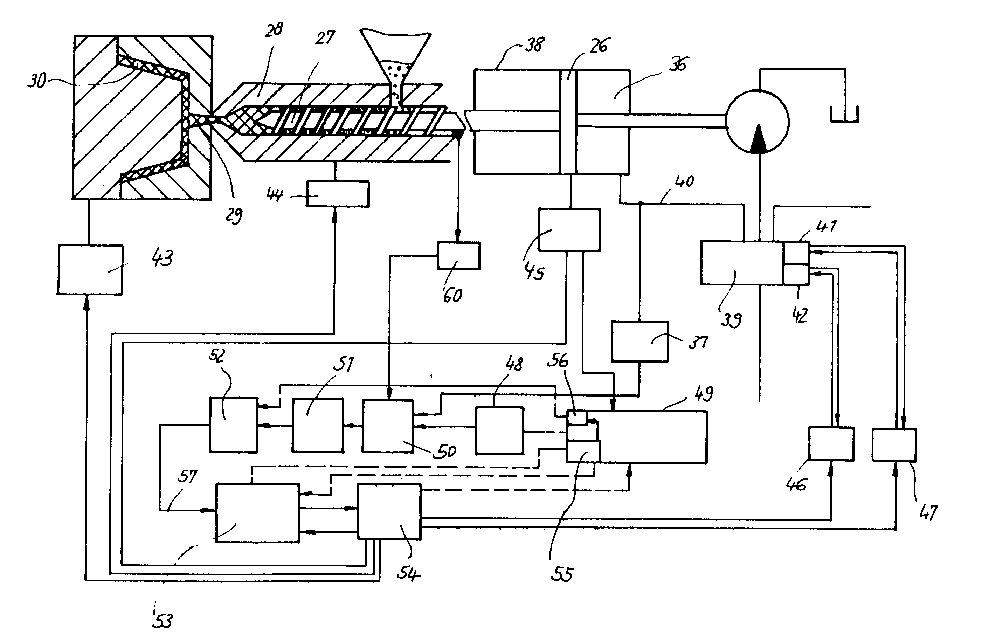

Zum Zeitpunkt 11 wird der Einspritzvorgang begonnen. Der Förderstrom erreicht entsprechend dem Übergangsverhalten der Förderstromsteuerung schnell den programmierten Förderstrom beim Spritzen 24. Dieser Förderstrom beim Spritzen 24 kann auch gestuft oder nach einer Funktion gesteuert verlaufen. Der Förderstrom verschiebt einen Spritzkolben 26 und preßt dabei Formmasse mittels eines Schneckenkolbens 27 aus einem Masseraum 28 über ein Ausgußsystem 29 in einen Formhohlraum 30 (Fig. 3). Spritzkolbenweg-, zeit- oder spritzdruckabhängig, wird auf Nachdrücken umgeschaltet. Dabei wird der Förderstrom beim Spritzen 24 auf den Förderstrom beim Nachdrücken 25 umgeschaltet. Ist der Formhohlraum 30 zu diesem Zeitpunkt schon vollständig gefüllt, kommt es, wie es zum Zeitpunkt 14 dargestellt ist, zu keinem Druckeinbruch, sondern, falls der Druckwert bei der Förderstromreduzierung 18 nicht auf diesen Wert begrenzt wird, zu einem weiteren Druckanstieg 22. Daraus, daß zum Zeitpunkt 14 der Druckverlauf 1 trotz verringertem Förderstrom einen Knick 21 aufweist und dann steiler ansteigt, ist sichtbar, daß der Formhohlraum 30 gerade zu diesem Zeitpunkt 14 gefüllt war. Dieser Zustand ist für das Spritzgießen der günstigste. Jedoch muß der Druckanstieg 22 verhindert werden. Das im Diagramm 10 dargestellte Signal der Druckerfassungseinheit 31 zeigt bis zum Zeitpunkt 14 "Druck unter Einstellwert" 6 an und schaltet beim Zeitpunkt 14 auf "Druck auf Einstellwert oder darüber" 7 um. Ein derartiges Signal 31 ist auch vorhanden, wenn das Werkzeug überfüllt ist, so daß dieser günstigste Einspritzverlauf eine komplizierte Regelungstechnik erfordern würde, um den Punkt der exakten Füllung des Formhohlraumes 30 mit der Reduzierung des Förderstromes in Übereinstimmung zu bringen. Eine werkzeugunabhängige maschinengebundene Regelung dieses Punktes ist, da in Richtung der Überfüllung des Formhohlraumes 30 kein Grenzwertkriterium gegeben ist, mit einfachen technischen Mitteln nicht möglich. Deshalb wird erfindungsgemäß vorgeschlagen, die Druckdifferenz zwischen dem Druckwert bei Förderstromreduzierung 17 oder 23 und dem Druckwert nach Förderstromreduzierung 19 oder 20 oder die Zeit bis zum erneuten Erreichen des Druckes vor der Förderstromreduzierung 34; 35 als Vergleichsgröße zu ermitteln und durch Regelung der Prozeßparameter innerhalb vorgegebener Toleranzen konstant zu halten. Je nach dem Füllungsgrad des Formhohlraumes 30 ist die Druckdifferenz zwischen Druckwert bei Förderstromreduzierung 17 oder 23 und dem Druckwert nach Förderstromreduzierung 19 oder 20 oder die Zeit bis zum erneuten Erreichen des Druckes vor der Förderstromreduzierung 34; 35 unterschiedlich. Wird zum Zeitpunkt 12 die Umschaltung auf Nachdrücken, das heißt die Förderstromreduzierung vorgenommen, zu dem der Formhohlraum 30 noch unvollständig gefüllt ist, ist die Druckdifferenz zwischen dem Druckwert bei Förderstromreduzierung 17 und dem Druckwert nach Förderstromreduzierung 19 relativ groß. Damit wird bei dem allgemein sehr geringen Förderstrom beim Nachdrücken 25 eine relativ lange Zeit bis zum Erreichen des Druckes vor der Förderstromreduzierung 34 zum Zeitpunkt 16 benötigt. In dieser Zeit kühlt sich die Formmasse im Formhohlraum 30 bereits stark ab, und dieser wird nur unvollständig gefüllt. Wird aber zu einem Zeitpunkt 13 zu dem der Formhohlraum 30 schon nahezu gefüllt ist, die Umschaltung auf Nachdrücken vorgenommen, ergibt sich im Spritzzylinderraum 36 nur eine geringe Druckdifferenz zwischen dem Druckwert bei Förderstromreduzierung 23 und dem Druckwert nach Förderstromreduzierung 20, und damit ist die Zeit bis zum erneuten Erreichen des Druckes vor der Förderstromreduzierung 35 zum Zeitpunkt 15 relativ kurz. Die vorgenannte Druckdifferenz zeichnet sich im Formhohlraum 30 bei einer Forminnendruckmessung in diesem Fall nicht ab.

In einer Ausführung der erfindungsgemäßen Lösung wird vorgesehen, daß der Druckwert nach Förderstromreduzierung 19 oder 20 geringer ist als der Druckwert bei Förderstromreduzierung 17 oder 23 und daß innerhalb einer entsprechenden vorgegebenen Zeit der Druckwert bei der Förderstromreduzierung 17 oder 23 wieder erreicht wird.

Bei einer spritzdruckabhängigen Umschaltung vom Spritzen auf Nachdrücken kann durch Variation des Druckvorgabewertes für die Umschaltung der Druckwert gefunden werden, der den vorgegebenen Bedingungen entspricht. Bei diesem Druckwert wird der Formhohlraum 30 vollständig, eigenspannungsarm und gratfrei gefüllt. Derartige Druckvorgabewerte sind in dem der Fig. 1 zugrundeliegenden Beispiel die Druckwerte bei Förderstromreduzierung 17; 18; 23. Diese Druckwerte werden zu verschiedenen Zeitpunkten 12; 13; 14 erreicht und reduzieren den Förderstrom beim Spritzen 24 auf den Förderstrom beim Nachdrücken 25. Zum Zeitpunkt 12; 13; 14 der Förderstromreduzierung wird das Signal der Druckerfassungseinheit 31; 32; 33 vom Signal "Druck unter Einstellwert" 6 auf das Signal "Druck auf Einstellwert oder darüber" 7 geschaltet. Im Falle der Vorgabe der Druckwerte bei Förderstromreduzierung 17; 23 sinkt der Druckwert nach Förderstromreduzierung 19; 20 und die Druckerfassungseinheit signalisiert "Druck unter Einstellwert"6. Je nach Füllgrad des Formhohlraumes 30 signalisiert die Druckerfassungseinheit nach einer Zeit bis zum erneuten Erreichen des Druckes vor der Förderstromreduzierung 34; 35 "Druck auf Einstellwert oder darüber" 7.

Ist nun die vorgegebene Zeit geringfügig länger als die Zeit bis zum erneuten Erreichen des Druckes vor der Förderstromreduzierung 35, würde beim Signal der Druckerfassungseinheit 32, das heißt, beim Druckwert bei Förderstromreduzierung 23 keine Änderung der Prozeßdaten erforderlich sein. Für die Vorgabe des Druckwertes bei Förderstromreduzierung 18 müßten, da nach der Förderstromreduzierung keine Unterbrechung des Signals der Druckerfassungseinheit 31 "Druck auf Einstellwert oder darüber" 7 durch das Signal "Druck unter Einstellwert" 6 erfolgt, Prozeßparameter verändert werden, wie beispielsweise der Umschaltdruck auf Nachdrücken verringert werden.

Für die Vorgabe des Druckwertes bei Förderstromreduzierung 17 müßten, da das Signal der Druckerfassungseinheit 33 in einer größeren Zeit bis zum erneuten Erreichen des Druckes vor der Förderstromreduzierung 34 als der vorgegebenen Zeit "Druck auf Einstellwert oder darüber" 7 er-folgt, Prozeßparameter verändert werden, beispiels-weise der Umschaltdruck vom Spritzen auf Nachdrücken erhöht werden.

Anstelle der Druckerhöhung kann auch der Förderstrom verringert werden. Unter Prozeßparameter müssen alle den Formfüllvorgang direkt und indirekt beeinflussenden Parameter, wie beispiels-weise Spritzdruck, Spritzgeschwindigkeit, Masse-temperatur, Spritzhub, Werkzeugtemperatur und andere betrachtet werden.

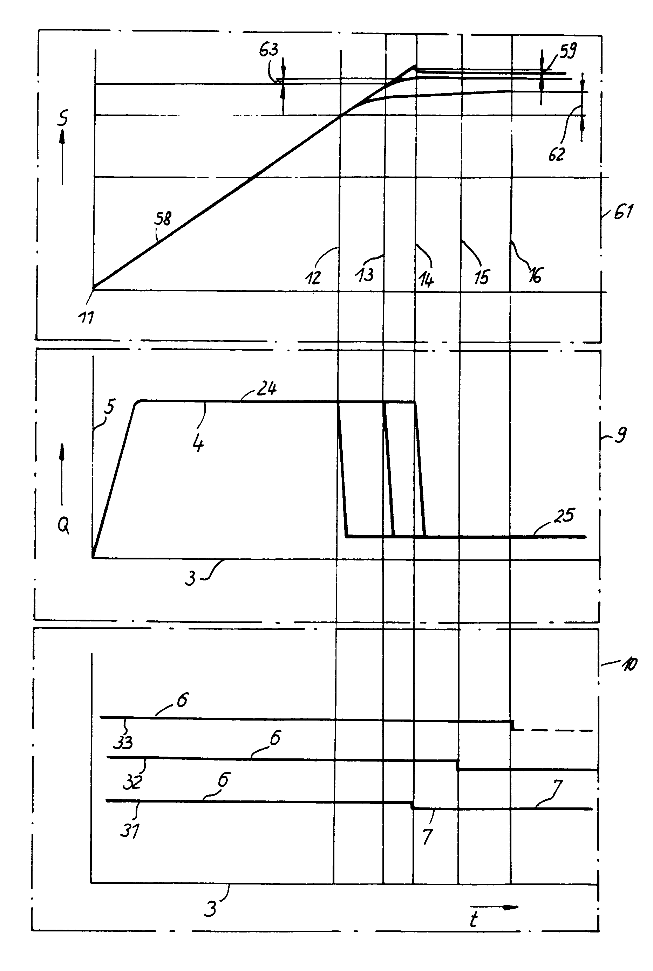

Anstelle des Druckwertes bei Förderstromreduzierung kann auch für die zweite Druckmeldung ein anderer vorgewählter Druck angestrebt werden. Dabei kann auch die Zeit von der Förderstromreduzierung bis zum Erreichen eines vorgegebenen Druckwertes als des Druckwertes bei Förderstromreduzierung 18 als Vergleichsgröße verwendet werden. In einer einfachen Lösung ist vorgesehen, daß pro Zyklus eine Korrektur des vorgegebenen Prozeßparameters erfolgt, indem bei Aufrechterhaltung des Signals "Druck auf Einstellwert oder darüber" 7 eine Veränderung des vorgesehenen Prozeßparameters in Richtung einer Spritzdruckverringerung, Spritzhubverkleinerung oder einer Spritzgeschwindigkeitserhöhung und bei einem Wechsel des Signals auf das Signal "Druck unter Einstellwert" 6 eine Veränderung des vorgesehenen Prozeßparameters in Richtung einer Spritzdruckerhöhung, ei-ner Spritzhubvergrößerung oder Spritzgeschwindig-keitssenkung vorgenommen wird. Die Kontrolle und gegebenenfalls die Veränderung der Prozeßparameter erfolgt vorzugsweise pro Zyklus. Für Spritzgießmaschinen, bei denen eine Zeitmeßeinrichtung oder ein Druckdifferenzbildner für eine andere Zweckbestimmung nicht vorhanden oder wegen Überlastung nicht nutzbar ist, stellt Fig. 2 ein weiteres Ausführungsbeispiel dar. Darin stellt es im Diagramm 61 den Spritzkolbenhubverlauf 58, im Dia-gramm 9 den Förderstromverlauf 4 mit der Förder-stromachse 5 und im Diagramm 10 das Signal einer Druckerfassungseinheit 31; 32; 33 mit der Stellung "Druck unter Einstellwert" 6 und "Druck auf Einstellwert oder darüber" 7 mit der Zeitachse 3 dar. Im allgemeinen wird der vorgegebene Druckwert auf einen Nachdruckwert gesenkt. Während des Spritzens ist es üblich, um eine Beeinflussung der Spritzgeschwindigkeit durch den Druck auszuschließen, einen hohen Druckwert vorzugeben. Dieser Druckwert wird dabei normalerweise nicht erreicht. Das Erreichen des Nachdruckwertes ist im Diagramm 10 am Signal der Druckerfassungseinheit 31; 32; 33 ersichtlich, die vom Schaltzustand "Druck unter Einstellwert" 6 auf den Schaltzustand "Druck auf Einstellwert oder darüber" 7 schaltet. Ist der Formhohlraum 30 zum Zeitpunkt der Umschaltung vom Spritzen auf Nachdrücken vollständig gefüllt, kommt es, wie es zum Zeitpunkt 14 dargestellt ist, je nach der Höhe der Nachdruckeinstellung noch einhergehend mit einer Druckspitze zu einer sehr geringen Spritzhubvergrößerung oder bei bereits überladenem Werkzeug zu einem Zurückfedern des Spritzkolbens 26 um einen Betrag 59 dargestellt. Bei vorzeitiger Umschaltung vom Spritzen auf Nachdrücken zum Zeitpunkt 12 kommt es zu einer Füllung des Formhohlraumes 30 während der Nachdruckphase. Eine vollständige Füllung des Formhohlraumes 30 ist dann meist nicht gewährleistet. Der sich dabei ergebende Betrag 62 für die Änderung des Spritzkolbenhubes bis zum Erreichen des Nachdruckwertes durch das Signal "Druck auf Einstellwert oder darüber" 7 zum Zeitpunkt 16 ist relativ groß. Ziel ist es, die Umschaltung vom Spritzen auf Nachdrücken zu einem Zeitpunkt vorzunehmen, zu dem das Werkzeug gefüllt ist und nur eine Volumenergänzung des infolge der Abkühlung auftretenden Schwundes bis zur Erstarrung erforderlich ist. Dieser Fall ist dann gegeben, wenn nach der Umschaltung vom Spritzen auf Nachdrücken und dabei bei der Reduzierung des Förderstromes beim Spritzen 24 auf den Förderstrom beim Nachdrücken 25 und Vorgabe des Nachdruckwertes bis zum Erreichen dieses Nachdruckwertes keine Veränderung des Spritzkolbenhubes auftritt. Ist der Nachdruckwert zu hoch eingestellt und wird dieser zum Zeitpunkt der Umschaltung vom Spritzen auf Nachdrücken gerade erreicht, tritt dieser als günstig beschriebene Zustand ebenfalls auf, das heißt, eine zu geringe Spritzkolbenhubeinstellung, wie sie zum Zeitpunkt 12 vorliegt, ist nicht eindeutig erkennbar. Eine zu große Spritzhubeinstellung ist aus diesem Spritzkolbenhubverlauf nur erkennbar, wenn ein Zurückfedern des Spritzkolbens 26 auftritt. Andererseits führt in der Kompressionsphase der in den Formhohlraum 30 eingespritzten Formmasse eine hohe Einspritzgeschwindigkeit zu einem hohen Druckanstieg, so daß es günstiger ist, noch eine Kompression der Formmasse mit geringem Förderstrom vorzunehmen. Die Änderung des Spritzkolbenhubes nach der Umschaltung vom Spritzen auf Nachdrücken ist ein Kennzeichen für den Füllungsgrad des Formhohlraumes 30. Deshalb schlägt die erfindungsgemäße Lösung vor, den Hub des Spritzkolbens 26 zum Zeitpunkt der Förderstromreduzierung 12; 13; 14 zu erfassen und die Anerung des Hubes des Spritzkolbens 26 bis zum Erreichen eines vergewählten Druckes oder des Druckes vor Beginn der Förderstromreduzierung zum Zeitpunkt 15; 16 als Vergleichsgröße für die Regelung, Steuerung und/oder Überwachung zu verwenden. Dabei gibt es prinzipiell die Möglichkeit der Kontrolle in wieweit der Spritzkolben 26 zurückfedert oder nachläuft und davon abhängig eine Veränderung der Prozeßparameter, vorzugsweise des Spritzhubes, der Einspritzzeit, des Umschaltdruckes oder des Nachdruckwertes. Auch andere Prozeßparameter sind verwendbar, wie beispielsweise die Schneckendrehzahl, der Staudruck, die Werkzeugtemperatur und die Massetemperatur. Für eine einmal gefundene günstige Einstellung, vor allem für den Nachdruckwert, kann damit eine sich an verändernde Verarbeitungsparameter anpassende Regelung aufgebaut werden.

Günstiger ist es, für die Änderung des Spritzkolbenhubes eine Maximal- und Minimalwertbegrenzung der Änderung des Hubes des Spritzkolbens 26 vorzugeben. Dabei wird bei Überschreitung des für die Änderung vorgegebenen Maximalwertes der Spritzhub oder die Einspritzzeit, oder der Spritzdruck für die Festlegung des Zeitpunktes 12; 13; 14 für die Umschaltung vom Spritzen auf Nachdrücken vergrößert oder der Nachdruck verringert und bei Unterschreitung des vorgegebenen Minimalwertes wird der Spritzhub, oder die Einspritzzeit, oder der Spritzdruck für die Festlegung des Zeitpunktes 12; 13; 14 für die Umschaltung vom Spritzen auf Nachdrücken verringert oder der Nachdruck erhöht.

Mit einer solchen Steuerung kann sich die Maschine ihren Arbeitspunkt selbst suchen. Dabei ist die gleiche Wahl des Wertes für den Nachdruck, wie er zum Zeitpunkt der Umschaltung vom Spritzen auf Nachdrücken oder die Vorgabe einer Beziehung zwischen beiden Drücken besonders günstig. Bei einer hydraulischen Druckumschaltung vom Spritzen auf Nachdrücken, bei der der Umschaltdruck und der Nachdruck so vorgegeben werden, daß sie gleich oder in einer festen Beziehung zueinander stehen, wird der Umschaltdruck so lange verändert, bis nach der Reduzierung des Förderstromes beim Spritzen 24 auf den Förderstrom beim Nachdrücken 25 sich die dabei ergebende Änderung des Spritzkolbenhubes dem vorgegebenen Bereich entspricht. Liegt der Umschaltpunkt zu zeitig, das heißt der Formhohlraum 30 ist noch unvollständig gefüllt, wie es im Diagramm 61 mit dem Spritzkolbenhubverlauf 58 zum Zeitpunkt 12 der Förderstromreduzierung dargestellt ist, ergibt sich die relativ große Spritzkolbenhubänderung mit dem Betrag 62. Durch Erhöhung des Umschaltdruckes, des Spritzhubes oder der Spritzzeit bis zur Förderstromreduzierung wird der Umschaltpunkt zum Zeitpunkt 13 erreicht. Die sich nach der Förderstromreduzierung bis zum Erreichen des vorgegebenen Druckes ergehende Spritzkolbenhubänderung besitzt nur noch den geringen Betrag 63. Liegt dieser Betrag 63 innerhalb der vorgegebenen Toleranz der Änderung des Spritzkolbenhubes, ist eine Änderung der Prozeßparameter nicht erforderlich.

Führt nun beispielsweise die Erhöhung der Werkzeugtemperatur zu einem geringeren Druckbedarf bei der Füllung des Formhohlraumes 30, wird die Änderung des Spritzkolbenhubes geringer und sinkt unter den Betrag des Minimalwertes ab. Durch eine Verringerung des Druckes für die Umschaltung vom Spritzen auf Nachdrücken, das heißt das Ansprechen der Förderstromreduzierung, wird der Betrag der Änderung des Spritzkolbenhubes wieder so verändert, daß er innerhalb der vorgegebenen Toleranzen der Änderung des Spritzkolbenhubes liegt. Dabei ist für Maschinen einfacher Bauart, deren Steuerung kein kompliziertes Rechnersystem besitzt, eine Änderung in konstanten Schritten vorgesehen. Erreichen die Prozeßparameter vorgegebene Grenzwerte, ist die Signalisierung einer Störung oder in einer entsprechend festgelegten Reihenfolge die Änderung eines anderen Prozeßparameters vorgesehen.

Zur Durchführung des Verfahrens ist die in Fig. 3 dargestellte Einrichtung vorgesehen. Diese Einrichtung besteht aus einer üblichen Spritzgießmaschine, bei der ein hydraulisch steuerbarer Ölstrom von einem Hydrauliksteuerblock 39 über eine hydraulische Verbindung 40 in den Spritzzylinderraum 36 des Spritzzylinders 38 gelangt und den Spritzkolben 26 und damit den Schneckenkolben 27 verschiebt. Dabei wird die im Masseraum 28 befindliche Formmasse über ein Angußsystem 29 in den Formhohlraum 30 gepreßt. Diese Spritzgießmaschine besitzt eine Druckerfassungseinheit 37, die ein Druckmeßwertgeber, ein Druckschalter oder auch ein die Öffnung das den Spritzdruck bestimmenden Begrenzungsventils meldender Signalgeber sein kann. Weiterhin besitzt diese Einrichtung den Spritzdruck und die Spritzgeschwindigkeit steuernde hydraulische Glieder 41; 42.

Weiterhin sind entsprechende Regler für die Prozeßparameter 43; 44; 45; 46; 47 vorhanden. In einfachen Spritzgießmaschinen, bei denen die Erfindung als Einstellhilfe für das schnelle und zuverlässige Finden günstiger Einstellwerte anwendbar ist, können die Regler für die Prozeßparameter 43; 44; 45; 46; 47 handeinstellbare Steuer- oder Regelgeräte sein. Die Druckerfassungseinheit 37 steht mit einem Signalgeber 48, der auch deren Bestandteil sein kann oder auch innerhalb der Maschinensteuerung 49 vorhanden sein kann, in Wirkverbindung. Vom Signalgeber 48 wird das entsprechende Signal entweder als den Druckwert bei Förderstromreduzierung 17; 18 kennzeichnendes analoges Signal und den Druckwert nach Förderstromreduzierung kennzeichnendes analoges Signal oder als digitales Signal, das die zwei Zustände "Druck unter Einstellwert" 6 und "Druck auf Einstellwert oder darüber" 7 kennzeichnet, and eine Verarbeitungseinheit 50 weitergeleitet. Innerhalb dieser Verarbeitungseinheit 50 wird das erste Signal gespeichert und entweder nach Eingang des zweiten Signals die Druckdifferenz gebildet oder die Kontrolle durchgeführt, ob das erste Signal während der Nachdruckphase wieder zusammenbricht, oder es wird eine Zeit gestartet und kontrolliert, ob das zweite Signal innerhalb diese Zeit kommt, oder es wird die Zeit zwischen dem ersten und zweiten Signal wertmäßig erfaßt. Diese Verarbeitungseinheit 50 besitzt eine Signalausgabeeinheit 51, die entweder ein Signal als unmittelbaren Hinweis zur Maschineneinstellung und Überwachung anzeigt und damit ein schnelles Einrichten der Maschine und eine schnelles subjektiv unabhängiges Auffinden eines günstigen Arbeitspunktes ermöglicht oder das Signal zur unmittelbaren automatischen Maschinensteuerung an einen Wandler 52 weiterleitet. Der Wandler 52 wandelt das Signal in ein den jeweiligen Prozeßparameter betreffendes vom nachfolgenden Regler 53 verarbeitbares Signal. Zu diesem Zweck kann dem Wandler 52 von der Maschinensteuerung 49 ein Steuerbefehl zugeleitet werden, der den zu steuernden Prozeßparameter festlegt. Zu diesem Zweck ist vorzugsweise in der Maschinensteuerung 49 ein Prozeßparametervorgabeteil 56 vorhanden. Der Regler 53 besitzt für die jeweiligen Prozeßparameter einen Regelalgorithmus, der die dem Eingangssignal 57, das er vom Wandler 52 erhält, entsprechende Sollwertänderung vorschreibt. Diese Sollwertänderung wird über ein nachfolgendes Sollwertvorgabeteil 54 dem jeweiligen Regler für Prozeßparameter 43; 44; 45; 46; 47 nach Abschluß des Spritzzyklus zugeführt. Es ist günstig, wenn das Sollwertvorgabeteil 54 mit der Maschinensteuerung 49 in Wirkverbindung steht und damit eine Grenzwertkontrolle durch die Maschinensteuerung 49 möglich ist. Zusätzlich kann die vorgesehene Prozeßparameterverstellung der Maschinensteuerung zugeführt werden, mit dem jeweiligen erreichten Sollwert und einem vorgegebenen Grenzwert in einem Grenzwertvorgabeteil 55 verglichen und bei Erreichen des Grenzwertes durch den Sollwert eine weitere Verstellung des Sollwertes durch Rückwirkung auf den Regler 53 gestoppt werden. Gleichzeitig erfolgt von Grenzwertvorgabeteil 55 ein Signal an das Prozeßparameterauswahlteil 56, und dieses gibt dem Wandler 52 einen anderen zu regelnden Prozeßparameter vor. Vom Wandler 52 erhält der Regler 53 ein neues Eingangssignal 57 und bewirkt über das Sollwertvorgabeteil 54 die Vorgabe des Sollwertes an einen anderen Regler für Prozeßparameter 43; 44; 45; 46; 47. Eine besonders vorteilhafte Ausführung geht davon aus, daß ein beim Öffnen des Druckbegrenzungsventils für den Spritzdruck ansprechender Signalgeber die Druckerfassungseinheit 37 darstellt. Sobald dieses Druckbegrenzungsventil sich wieder schließt, wie es bei Förderstromreduzierung bei noch nicht ganz gefülltem Formhohlraum 30 geschieht, verändert sich auch das Signal. Durch den Einsatz eines derartigen die Öffnung des Spritzdruckventils kennzeichnenden hydraulischen Gliedes kann die erfindungsgemäße Lösung in allen Spritzgießmaschinen, die bei Umschaltung vom Spritzen auf Nachdrücken den Förderstrom reduzieren, angewendet werden. Es kann eine spritzhubabhängige Steuerung oder zeitabhängige Steuerung bei Anwendung des Verfahrens und einer entsprechenden Einrichtung optimiert und der Spritzhub oder der Umschaltzeitpunkt füllgradabhängig gesteuert werden, wenn durch die Prozeßparameterwahl vor Erreichen des Umschaltpunktes vom Spritzen auf Nachdrücken der Begrenzungsdruck erreicht wird.

Für die Nutzung des Druckeinbruches nach Reduzierung des Förderstromes ist der Druck im Spritzzylinder die günstigste Meßgröße, aber auch ein anderer Druck, beispielsweise der Druck im Masseraum, ist verwendbar. Bisher wurde mit der Umschaltung vom Spritzen auf Nachdrücken sowohl der Förderstrom als auch der Druckvorgabewert verändert. Da zum Zeitpunkt der Förderstromreduzierung bei optimaler Prozeßparametervorwahl der Spritzdruck dem zum Füllen des Formhohlraumes 30 erforderlichen Druck und damit dem zur Verhinderung von Einfallstellen am Formteil erforderlichen Druck entspricht, ist eine Druckreduzierung vor Versiegelung des Ausgusses meistens nicht sinnvoll. Damit wird beim Umschalten vom Spritzen auf Nachdrücken vorerst nur eine Reduzierung des Förderstromes und erst nach dem zweiten Erreichen des Umschaltdruckes eine Steuerung des Nachdruckes erforderlich. Ein Druckeinbruch in der Füllphase des Formhohlraumes 30 wird allgemein als ungünstig angesehen. Die Nutzung des Druckeinbruches für die Steuerung des Einspritzvorganges wird deshalb für sinnvoll angesehen, weil der Druckeinbruch sehr gering gehalten wird und innerhalb kurzer Zeit der Druckwert bei Förderstromreduzierung wieder erreicht wird und sich dieser geringe Druckeinbruch, falls überhaupt feststellbar, nur gering auf den Druck im Formhohlraum auswirk. Da die Steuerung so erfolgt, wegen der Minimierung der Druckdifferenz oder Zeit bis zum zweiten Erreichen des Druckwertes bei Förderstromreduzierung, daß der Formhohlraum zum Zeitpunkt der Umschaltung vom Spritzen auf Nachdrücken bereits gefüllt ist, wirkt sich eine kurzzeitig geringfügige Druckabsenkung auf das Formteil nicht aus. Die allgemein vorhandenen technischen Bedenken konnten durch Messungen widerlegt werden.

In einer anderen Ausführung zur Durchführung des in Fig. 2 bereits beschriebenen Verfahrens besitzt die Einrichtung eine die Stellung des Spritzkolbens 26 zum Zeitpunkt der Förderstromreduzierung erfassende digitale oder analoge Meßeinrichtung 60, die mit der Verarbeitungseinheit 50 in Wirkverbindung steht. Zum Zeitpunkt der Umschaltung vom Spritzen auf Nachdrücken, das heißt, zum Zeitpunkt der Förderstromreduzierung wird der von der Meßeinrichtung 60 erfaßte Schneckenhub in der Verarbeitungseinheit 50 gespeichert, und nach Erreichen des vorgewählten Druckwertes wird der über die Druckerfassungseinheit 37 erfaßte Druckwert im Signalgeber 48 ein Signal auslösen, das als Schaltsignal in der Verarbeitungseinheit 50 ein erneutes Erfassen der Stellung des Schneckenkolbens 27 mittels der Meßeinrichtung 60 bewirkt. Die nachfolgende Signalausgabeeinheit 51 zeigt entweder die erforderliche Änderung des Prozeßparameters für eine Handverstellung an oder beeinflußt unter Zwischenschaltung des Wandlers 52 das Eingangssignal 57 des Reglers 53, der wiederum den vom Sollwertvorgabeteil 54 ausgegebenen Wert für den jeweiligen Regler für Prozeßparameter 43; 44; 45; 46; 47 beeinflußt.

Die Bezugzeichen in den Ansprüchen dienen lediglich zum besseren Verständnis und sollen den Schutzumfang nicht beschränken.

**Patentansprüche**

1. Verfahren zur Regelung und Steuerung des Spritzgießprozesses und/oder dessen Überwachung beim Spritzgießen von Formteilen auf hydraulischen Spritzgießmaschinen, bei denen zur Umschaltung vom Spritzen auf Nachdrücken der Förderstrom reduziert wird und bei denen eine Druckerfassungseinheit für Gen Spritzdruck vorhanden ist, **dadurch gekennzeichnet, daß** die Zeit (34, 35) zwischen dem Umschaltpunkt der Förderstromreduzierung und dem Erreichen eines vorgewählten Druckes oder des Druckes bei Förderstromreduzierung oder eines damit im Zusammenhang stehenden Signals (31, 32, 33) oder die Zeit zwischen einem ersten Erreichen eines vorgewählten Druckes bei Förderstromreduzierung (17, 18, 23) und einem zweiten Erreichen des gleichen oder eines anderen vorgewählten Druckes nach der Förderstromreduzierung oder daß der Spritzkolbenhub zum Zeitpunkt (12, 13, 14) der Förderstromreduzierung erfaßt wird und die Änderung des Spritzkolbenhubes bis zum Erreichen eines vorgewählten Druckes oder des Druckes vor Beginn der Förderstromreduzierung oder daß der Betrag der Druckdifferenz zwischen dem maximalen Druck bei Förderstromreduzierung (17, 23) und dem minimalen Druck nach der Förderstromreduzierung (19, 20) erfaßt wird und als Vergleichsgröße für die Regelung, Steuerung und/oder Überwachung verwendet wird.

2. Verfahren nach Anspruch 1, **dadurch gekennzeichnet, daß** mit der Förderstromreduzierung oder mit dem diese Förderstromreduzierung bewirkenden oder charakterisierenden Schaltsignal eine vorgegebenen Zeit gestartet wird und daß die Prozeßparameter so verstellt werden, daß bei fehlender Druckabsenkung nach Förderstromreduzierung im nächsten Zyklus Prozeßparameter vorzugsweise Spritzdruck, Spritzhub, Einspritzzeit, Massetemperatur oder Werkzeugtemperatur um einen vorgegebenen Betrag gesenkt werden und/der Prozeßparameter vorzugsweise Spritzgeschwindigkeit um einen vorgegebenen Betrag erhöht werden und daß, wenn bei Druckabsenkung nach Förderstromreduzierung ein Erreichen des vorgewählten Druckes innerhalb der vorgegebenen Zeit nicht vorhanden ist, im nächsten Zyklus Prozeßparameter, vorzugsweise Spritzdruck, Massetemperatur, Spritzhub, Einspritzzeit oder Werkzeugtemperatur um einen vorgegebenen Betrag erhöht und/oder Prozeßparameter vorzugsweise Spritzgeschwindigkeit um einen vorgegebenen Betrag verringert werden.

3. Verfahren nach Anspruch 1, **dadurch gekennzeichnet, daß** abhängig vom Auftreten oder Nichtauftreten eines Druckeinbruches nach der Förderstromreduzierung je Zyklus eine Veränderung eines Prozeßparameters um einen vorgegebenen Betrag vorgenommen wird und daß dabei bei Auftreten des Druckeinbruches vorzugsweise der Spritzdruck, der Spritzhub, die Einspritzzeit, die Massetemperatur und/oder die Werkzeugtemperatur erhöht werden und/oder die Spritzgeschwindigkeit verringert wird und daß bei Nichtauftreten des Druckeinbruches vorzugsweise der Spritzdruck, der Spritzhub, die Einspritzzeit, die Massetemperatur und/oder die Spritzgeschwindigkeit erhöht wird.

4. Verfahren nach Anspruch 1, **dadurch gekennzeichnet, daß** bei Unterschreitung einer vorgegebenen Änderung (62) des Spritzkolbenhubes oder Zurückfedern des Spritzkolbens nach der Förderstromreduzierung bis zum Erreichen des vorgewählten Druckes für den nächsten Spritzzyklus Prozeßparameter, vorzugsweise der Spritzhub oder die Einspritzzeit bis zur Umschaltung vom Spritzen auf Nachdrücken oder der Umschaltdruck, verringert werden und/oder Prozeßparameter, vorzugsweise der Nachdruck, erhöht werden und daß bei Überschreitung einer gleichen oder einer anderen voregebenen Änderung des Spritzkolbenhubes nach der Förderstromreduzierung bis zum Erreichen des vorgewählten Druckes Prozeßparameter, vorzugsweise der Spritzhub oder die Einspritzzeit oder der Umschaltdruck vom Spritzen auf Nachdrücken vergrößert werden, und/oder daß Prozeßparameter, vorzugsweise der Nachdruck verringert werden.

5. Verfahren nach Anspruch 1 bis 4, **dadurch gekennzeichnet, daß** für die Veränderung der Prozeßparameter Grenzwerte vorgegeben werden und daß bei Erreichen der Grenzwerte eine Signalisierung einer Störung und/oder entsprechend einer festgelegten Reihenfolge ein anderer Prozeßparameter verändert wird.

6. Einrichtung zur Durchführung des Verfahrens nach den Ansprüchen 1 bis 3 und 5, **dadurch gekennzeichnet, daß** einer den Druck zum Zeitpunkt der Förderstromreduzierung meldenden Druckerfassungseinheit (37) und/oder einen die Förderstromreduzierung meldenden Signalgeber (45) eine Verarbeitungseinheit (50), die mindestens einen Speicher für eine erstes Signal besitzt und vorzugsweise einen Druckdifferenzbildner oder eine Zeitmeß- oder Zeitvorgabeeinheit besitzt nachgeschaltet ist und der wiederum eine Signalausgabeeinheit (51) nachgeschaltet ist.

7. Einrichtung zur Durchführung des Verfahrens nach den Ansprüchen 1, 4 und 5, **dadurch gekennzeichnet, daß** die einen Druckwert signalisierende Druckerfassungseinheit (37) mit einem einer Verarbeitungseinheit (50) zugehörigen Schaltglied in Wirkverbindung steht und daß eine die Stellung des Spritzkolbens zum Zeitpunkt der Förderstromreduzierung erfassende digitale oder analoge Meßeinrichtung (60) vorhanden ist und daß dieser die Verarbeitungseinheit (50), die mindestens einen Speicher für ein erstes Meßsignal besitzt, nachgeschaltet ist und daß dieser wiederum eine Signalausgabeeinheit (51) nachgeschaltet ist.

8. Einrichtung nach Anspruch 6 und 7, **dadurch gekennzeichnet, daß** die Signalausgabeeinheit (51) eine Anzeigevorrichtung mit mindestens folgenden zwei Anzeigezuständen besitzt:
   1. Parameter, vorzugsweise Spritzhub, Einspritzzeit und/oder Umschaltdruck vom Spritzen auf Nachdrücken verringern und/oder Nachdruck erhöhen und
   2. Parameter, vorzugsweise Spritzhub, Einspritzzeit und/oder Umschaltdruck vom Spritzen auf Nachdrücken vergrößern und/oder Nachdruck verringern.

9. Einrichtung nach Anspruch 6 und 7, **dadurch gekennzeichnet, daß** der Signalausgabeeinheit (51) ein das die Änderungsrichtung des/der Prozeßparameter kennzeichnende Signal in das zu ändernde Prozeßparametersignal umsetzender Wandler (52) nachgeschaltet ist und daß ein diesem nachgeschalteter Regler (53) vorhanden ist, der mit einem Sollwertvorgabeteil (54) der Regler für Prozeßparameter (43; 44; 45; 46; 47) in Wirkverbindung steht.

10. Einrichtung nach Anspruch 9, **dadurch gekennzeichnet, daß** eine Maschinensteuerung (49) ein Grenzwertvorgabeteil (55) für die Prozeßparameter besitzt und daß dieses mit dem Regler (53) in Wirkverbindung steht und daß diesem ein Prozeßparameterauswahlteil (56) nachgeschaltet ist, das mit dem Wandler (52) in Wirkverbindung steht.

**Claims**

1. A process for regulating and controlling the injection-moulding process and/or the monitoring thereof in the injection-moulding of moulded parts on hydraulic injection-moulding machines, in which, in order to switch from injection to subsequent pressing, the feed current is reduced and in which there is a pressure, detection unit for the injection pressure, characterised in that the time (34, 35) between the switching point of the reduction of the feed current and the reaching of a preselected pressure or of the pressure consequent upon the reduction of the feed current or of a signal (31, 32, 33) which is in conjunction therewith or the timed between the first reaching of a preselected pressure upon reduction of the feed current (17, 10, 23) and the second reaching of the same or a different preselected pressure after the reductions of the feed current or that the stroke of the injection ram at the moment (12, 13, 14) of the reduction of the feed current is detected and the change in the stroke of the injection ram until the reaching of a preselected pressure or of the pressure before the start of the reduction of the feed current or that the amount of pressure difference between the maximum pressure upon reduction of the feed current (17, 23) and the minimum pressure after reduction of the feed current (19, 20) is detected and is used as a comparison value for regulation, control and/or monitoring.

2. A process according to Claim 1, characterised in that a given period is started with the reduction of the feed current or with the switching signal bringing about or characterising this reduction of the feed current and that the process parameters are adjusted such that if there is no pressure drop after reduction of the feed current in the next cycle process parameters, preferably injection pressure, injection stroke, injection time, mass temperature or mould temperature are reduced by a given amount and/or process parameters, preferably injection rate, are increased by a given amount and that, if when the pressure drops after the reduction of the feed current the preselected pressure is not reached within the given period, in the next cycle process parameters, preferably injection pressure, mass temperature, injection stroke, injection time or mould temperature are increased by a given amount and/or process parameters, preferably injection rate, are reduced by a given amount.

3. A process according to Claim 1, characterised in that dependent on the occurrence or non-occurrence of a pressure in-rush after the reduction of the feed current per cycle a change is made in a process parameter by a given, amount and that in so doing when the pressure in-rush occurs preferably the injection pressure, the injection stroke, the injection time, the mass temperature and/or the mould temperature are increased and/or the injection rate is reduced and that if the pressure in-rush does not occur preferably the injection pressure, the injection stroke, the injection time, the mass temperature and/or the injection rate is increased.

4. A process according to Claim 1, characterised in that if a change in the injection ram stroke falls short of a given change (62) or if there is spring-back of the injection ram after the reduction of the feed current until the preselected pressure is reached for the next injection cycle process parameters, preferably the injection stroke or the injection time until switching from injection to subsequent pressing or the switching pressure, are reduced and/or process parameters, preferably the subsequent pressure, are increased and that if an identical or a different given change in the injection ram stroke is exceeded after the reduction of the feed current until the preselected pressure is reached process parameters, preferably the injection stroke or the injection time or the switching pressure from injection to subsequent pressing are increased, and/or that process parameters, preferably the subsequent pressure, are reduced.

5. A process according to Claims 1 to 4, characterised in that limit values are set for changing the process parameters and that when the limit values are reached signalling of a disruption [occurs] and/or according to a set sequence a different process parameter is changed.

6. An apparatus for performing the process according to Claims 1 to 3 and 5, characterised in that a pressure detection unit (37) which indicates the pressure at the moment of reduction of the feed current and/or a signal transmitter (45) which indicates the reduction of the feed current is succeeded by a processing unit (50) which has at least one memory for a first signal and preferably a pressure-difference forming means or a time-measuring or time-setting unit and said processing unit in turn is succeeded by a signal output unit (51).

7. An apparatus for performing the process according to Claims 1, 4 and 5, characterised in that the pressure detection unit (37) which signals a pressure value is in operative connection with a switching member belonging to a processing unit (50) and that a digital or analog measuring means (60) is present which detects the position of the injection ram at the moment of reduction of the feed current and that said measuring means is succeeded by the processing unit (50), which has at least one memory for a first measuring signal, and that said processing unit in turn is succeeded by a signal output unit (51).

8. An apparatus according to Claims 6 and 7, characterised in that the signal output unit (51) has a display device with at least the following two display states:

    1. reducing parameters, preferably injection stroke, injection time and/or switching pressure from injection to subsequent pressing and/or increasing subsequent pressure and
    2. increasing parameters, preferably injection stroke, injection time and/or switching pressure from injection to subsequent pressing and/or reducing subsequent pressure.

9. An apparatus according to Claims 6 and 7, characterised in that the signal output unit (51) is succeeded by a converter (52) converting the signal marking the direction of change of the process parameter(s) into the process parameter signal which is to be changed and that a controller (53) succeeding said converter is present which is in operative connection with a desired value setting section (54) of the controllers for process parameters (43; 44; 45; 46; 47).

10. An apparatus according to Claim 9, characterised in that a machine control means (49) has a limit value setting section (55) for the process parameters and that the latter is in operative connection with the controller (53) and that the controller is succeeded by a process parameter selection section (56) which is in operative connection with the converter (52).

**Revendications**

1. Procédé pour régler et commander le processus de moulage par injection et/ou sa surveillance lors du moulage par injection de pièces moulées dans des machines de moulage par injection hydrauliques, dans lesquelles, pour passer de l'injection au maintien en pression, le courant d'alimentation est réduit, et dans lesquelles une unité de détection de pression pour la pression d'injection est prévue,

caractérisé en ce que le temps (34,35) entre le point de démarrage de la réduction du courant d'alimentation et l'obtention d'une pression présélectionnée ou de la pression lors de la réduction du courant d'alimentation, ou d'un signal (31,32,33) dépendant de celle-ci, ou le temps entre une première obtention d'une pression présélectionnée lors de la réduction du courant d'alimentation (17,18,23) et une seconde obtention de la même pression présélectionnée ou d'une autre après la réduction du courant d'alimentation, est détecté, ou en ce que la course du piston d'injection au moment (12,13,14) de la réduction du courant d'alimentation est détectée, et la modification de la course du piston d'injection jusqu'à l'obtention d'une pression présélectionnée ou de la pression avant le début de la réduction du courant d'alimentation est détectée, ou en ce que la valeur de la différence de pressions entre la pression maximale lors de la réduction du courant d'alimentation (17,23) et la pression minimale après la réduction du courant d'alimentation (19,20) est détectée et est utilisée, comme grandeur de comparaison, pour le réglage, la commande et/ou la surveillance

2. Procédé selon la revendication 1, caractérisé en ce que, avec la réduction du courant d'alimentation ou avec le signal caractérisant ou déclenchant cette reduction du courant d'alimentation, est démarré un temps prédéfini, et en ce que les paramètres de processus sont réglés de sorte que, lorsque la pression ne diminue pas après la réduction du courant d'alimentation, les paramètres du processus, de préférence la pression d'injection, la course d'injection, la durée d'injection, la température massique ou la température de l'outil, sont diminués dans le cycle suivant d'une valeur prédéfinie, et/ou les paramètres du processus, de préférence la vitesse d'injection, sont augmentés d'une valeur prédéfinie, et en ce que, quand, lors de la diminution de pression après la réduction du courant d'alimentation, on n'atteint pas la pression présélectionnée à l'intérieur du temps prédéfini, dans le cycle suivant, les paramètres du processus, de préférence la pression d'injection, la température massique, la course d'injection, la durée d'injection ou la température de l'outil, sont augmentés d'une valeur prédéfinie et/ou les paramètres du processus, de préférence la vitesse d'injection, sont diminués d'une valeur prédéfinie.

3. Procédé selon la revendication 1, caractérisé en ce que, de façon dépendant de l'existence ou non d'une chute de pression après la réduction du courant d'alimentation, à chaque cycle, on procède à une modification d'un paramètre du processus d'une valeur prédéfinie, et en ce que, de plus, lorsqu'il existe une telle chute de pression, de préférence la pression d'injection, la course d'injection, la durée d'injection, la température massique et/ou la température de l'outil sont augmentées et/ou la vitesse d'injection est diminuée, et en ce que, lorsqu'une telle chute de pression n'existe pas, de préférence la pression d'injection, la course d'injection, la température massique et/ou la vitesse d'injection sont augmentées.

4. Procédé selon la revendication 1, caractérisé en ce que, lorsque l'on n'atteint pas une modification prédéfinie (62) de la course du piston d'injection ou des ressorts de rappel du piston d'injection après la réduction du courant d'alimentation jusqu'à l'obtention de la pression présélectionnée, pour le cycle d'injection suivant, des paramètres du processus, de préférence la course d'injection ou la durée d'injection jusqu'au passage de l'injection au maintien en pression ou la pression correspondant à un tel passage, sont diminués et/ou des paramètres du processus, de préférence la pression de maintien en pression, sont augmentés, et en ce que, lorsque l'on dépasse une même modification prédéfinie, ou une autre, de la course du piston d'injection après la réduction du courant d'alimentation jusqu'à l'obtention de la pression présélectionnée, des paramètres du processus, de préférence la course d'injection ou la durée d'injection ou la pression du,passage de l'injection au maintien en pression, sont augmentés, et/ou des paramètres du processus, de préférence la pression de maintien en pression, sont diminués.

5. Procédé selon les revendications 1 à 4, caractérisé en ce que, pour modifier les paramètres du processus, des valeurs limites sont prédéfinies, et en ce que, lorsque l'on atteint les valeurs limites, une signalisation d'un problème a lieu et/ou, de façon correspondant à une succession déterminée, un autre paramètre du processus est modifié.

6. Dispositif pour la mise en oeuvre du procédé selon les revendications 1 à 3 et 5, caractérisé en ce qu'une unité de traitement (50), qui possède au moins une mémoire pour un premier signal et, de préférence, possède un moyen pour former une différence de pressions ou une unité de présélection et de mesure du temps, est disposée en aval d'une unité de détection de pression (37) signalant la pression au moment de la réduction du courant d'alimentation et/ou d'un moyen de transmission de signaux (45) signalant la réduction du courant d'alimentation, unité qui, par ailleurs, est disposée en amont d'une unité de sortie de signaux (51).

7. Dispositif pour la mise en oeuvre du procédé selon les revendications 1, 4 et 5, caractérisé en ce que l'unité de détection de pression (37) signalant une valeur de pression est en liaison fonctionnelle avec un organe de commutation associé à une unité de traitement (50), et en ce qu'un dispositif de mesure analogique ou numérique (60), détectant la position du piston d'injection au moment de la réduction du courant d'alimentation est prévu, et en ce que l'unité de traitement (50), qui possède au moins une mémoire pour un premier signal de mesure, est disposée en aval de celui-ci, et en ce qu'une unité de sortie de signaux (51) est, quant à elle, disposée en aval de celle-ci.

8. Dispositif selon les revendications 6 et 7, caractérisé en ce que l'unité de sortie de signaux (51) possède un dispositif d'affichage présentant au moins les deux états d'affichage suivants :
1. diminuer les paramètres, de préférence la course d'injection, la durée d'injection et/ou la pression de passage de l'injection au maintien en pression et/ou augmenter la pression de maintien en pression, et
2. augmenter les paramètres, de préférence la course d'injection, la durée d'injection et/ou la pression de passage de l'injection au maintien en pression et/ou diminuer la pression de maintien en pression.

9. Dispositif selon les revendications 6 et 7, caractérisé en ce que l'unité de sortie de signaux (51) est disposée en amont d'un convertisseur (52) transformant le signal caractérisant le sens de modification du ou des paramètres du processus en le signal des paramètres du processus à modifier, et en ce qu'il est prévu un régulateur (53), en aval de celui-ci, qui est en liaison fonctionnelle avec une partie de présélection de valeurs de consigne (54) du régulateur pour les paramètres du processus (43,44,45,46,47).

10. Dispositif selon la revendication 9, caractérisé en ce qu'une commande de machine (49) possède une partie de présélection de valeurs limites (55) pour les paramètres du processus, et en ce que celle-ci est en liaison fonctionnelle avec le régulateur (53), et en ce qu'une partie de sélection de paramètres du processus (56) est disposée en aval de celui-ci, et est en liaison fonctionnelle avec le convertisseur (52).